(19) Europäisches Patentamt
European Patent Office
Office européen des brevets

(11) **EP 1 931 126 B1**

(12) **EUROPEAN PATENT SPECIFICATION**

(45) Date of publication and mention
of the grant of the patent:
**01.02.2012 Bulletin 2012/05**

(51) Int Cl.:
***H04N 1/40*** (2006.01)

(21) Application number: **07122170.9**

(22) Date of filing: **03.12.2007**

(54) **Image processing apparatus and image processing method**

Bildverarbeitungsgerät und Bildverarbeitungsverfahren

Appareil et procédé de traitement d'images

(84) Designated Contracting States:
**DE FR GB NL**

(30) Priority: **07.12.2006 KR 20060123754**
**03.09.2007 KR 20070088822**

(43) Date of publication of application:
**11.06.2008 Bulletin 2008/24**

(60) Divisional application:
**11189520.7**

(73) Proprietor: **Samsung Electronics Co., Ltd.**
**Gyeonggi-do 442-742 (KR)**

(72) Inventors:
• **Oh, Hyun-soo**
**Gyeonggi-do,**
**Suwon-si (KR)**

• **Kim, Kyeong-man**
**Gyeonggi-do,**
**Suwon-si (KR)**

(74) Representative: **Waddington, Richard**
**Appleyard Lees,**
**15 Clare Road**
**Halifax HX1 2HY (GB)**

(56) References cited:
**US-A- 5 062 001     US-A1- 2004 257 378**

• **"Color-to-grayscale conversion to maintain discriminability" COLOR IMAGING IX: PROCESSING, HARDCOPY, AND APPLICATIONS, PROCEEDINGS OF SPIE-IS&T ELECTRONIC IMAGING, SPIE, US, vol. 5293, 20 January 2004 (2004-01-20), pages 196-202, XP007908249 ISBN: 978-0-8194-5196-5 [retrieved on 2004-02-11]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present general inventive concept relates to an image processing apparatus and an image processing method thereof, and more particularly, to an image processing apparatus which converts a color image to be printed into a gray image, and an image processing method thereof.

Description of the Related Art

An image processing apparatus, such as a computer system, is provided as a host apparatus of a printer, a multi-function printer, etc. (hereinafter, referred to as a printing apparatus) and controls operations of the printing apparatus according to a user's commands. The image processing apparatus changes a data of an original image of a picture, a text, or the like to be printed into a data which can be processed by the printing apparatus (hereinafter, referred to as a printing data) and transmits the printing data to the printing apparatus. The printing apparatus performs printing of the printing data to form an output image on a printing medium, such as a paper.

The original image may be provided as a color image which is represented by an RGB color space or an RGB color model. The color image may be converted into a gray image to be printed. A gray image being defined as one of a gray-scale and a monochromatic representation of the color image. Generally, a conversion from a color image into a gray image (hereinafter, referred to as a gray conversion) may be performed by using a luminance element only in a color space such as Hue Saturation Lightness (HSL), CIELab, YCbCr, etc. For example, the image processing apparatus converts an RGB image, which is an image of the RGB color space, into a YCbCr image, which is an image of the YCbCr color space, by a conversion equation between different color spaces, thereby obtaining a gray image using only a luminance element, i.e., a Y element, of the converted image.

However, since a conventional conversion method takes a luminance element of a Y element but drops a chrominance element of a CbCr element for a gray conversion, images with different colors but similar brightnesses may not be distinguished on gray images.

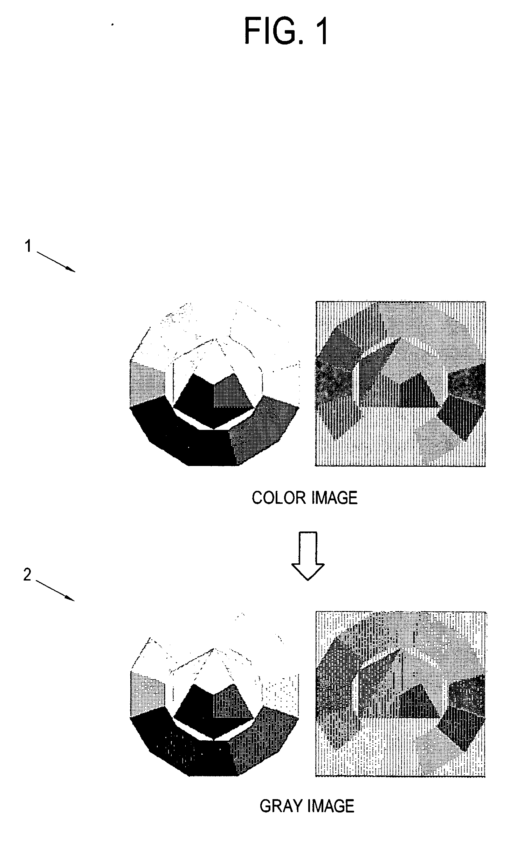

For example, FIG. 1 shows printing results of an RGB image 1 and a first gray image 2 into which the RGB image 1 is gray-converted by the conventional conversion method. Referring to FIG. 1, figures of the RGB image 1 are all obviously distinguished, while some figures of the gray image 2 are not distinguished clearly but just show some brightness difference.

"Colour-to-grayscale conversion to maintain discriminability" COLOR IMAGING IX: PROCCESSING, HARDCOPY, AND APPLICATIONS, PROCEEDINGS OF SPIE-IS&T ELECTRONIC IMAGING, SPIE, US, vol.5293, 20 January 2004, pages 196-202, discloses a method of converting colour business graphics to grayscale in a manner that preserves discriminability.

US 5062001 discloses a gray scale system for visual displays.

US 6 574 004 discloses converting a color image into a gray image for printing according to user-specified target gray values associated with colors having combinations of maximun and minimum quantitative component values.

SUMMARY OF THE INVENTION

The present general inventive concept provides an image processing apparatus and an image processing method to clearly distinguish objects when a color image to be printed is converted into a gray image.

Additional aspects and utilities of the present general inventive concept will be set forth in part in the description which follows and, in part, will be obvious from the description, or may be learned by practice of the present general inventive concept.

According to the present invention there is provided an apparatus and method as set forth in the appended claims. Other features of the invention will be apparent from the dependent claims, and the description which follows.

BRIEF DESCRIPTION OF THE DRAWINGS

These and/or other aspects and utilities of the present general inventive concept will become apparent and more readily appreciated from the following description of the exemplary embodiments, taken in conjunction with the accompanying drawings of which:

FIG. 1 illustrates a printed first gray image into which an RGB image is gray-converted by a conventional conversion method;

FIG. 2 illustrates a block diagram of an image processing apparatus according to an exemplary embodiment of the present general inventive concept;

FIG. 3 illustrates an RGB color space to display eight representative colors of red (R), green(G), blue (B), cyan (C), magenta (M), yellow (Y), black (K), and white (W);

FIG. 4 illustrates brightness output of a printing apparatus according to input of a linearly-increasing gray value;

FIG. 5 illustrates gray values according to eight representative values (K, B, R, M, G, C, Y, and W) of uniform brightness intervals;

FIG. 6 illustrates a printed second image into which an RGB image is gray-converted according to an exemplary embodiment of the present general inventive concept; and

FIG. 7 is a flow chart to illustrate an operation of the image processing apparatus according to an exemplary embodiment of the present general inventive concept.

## DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The exemplary embodiments are described below so as to explain the present general inventive concept by referring to the figures.

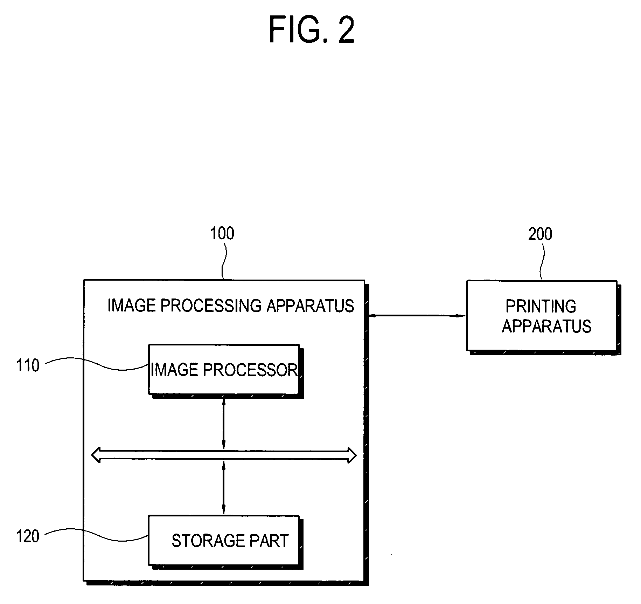

FIG. 2 illustrates a block diagram of an image processing apparatus according to an exemplary embodiment of the present general inventive concept. Referring to FIG. 2, the image processing apparatus 100, as a host apparatus of a printing apparatus 200, may be provided as a computer system. The image processing apparatus 100 processes a data of an original image of a picture, a photograph, a text, and other known images in the art by a process, such as a half-toning process or the like, to get a printing data and provides the printing data to the printing apparatus 200.

The printing apparatus 200 prints a printing data provided from the image processing apparatus 100 and forms an output image on a printing medium, such as a paper. The printing apparatus 200 may be realized by a printer, a multi-function printer and other known printing apparatuses in the art. The printing apparatus 200 can perform printing by an ink-jet method, a laser method, and other known printing methods in the art.

Referring to FIG. 2, the host apparatus 100 may include an image processor 110. The image processor 110 converts a data of an original image to be printed into a printing data which can be processed by the printing apparatus 200. Further, the image processor 110 performs a gray conversion to convert an original image from a color image to a gray image.

A color image may be provided as an RGB image. The image processor 110 assigns one gray value of a limited predetermined range to each of a plurality of colors in an RGB color space. For example, if a converted gray image is 8 bits, a gray value range may be between 0 and 255.

The image processor 110 determines a plurality of representative colors and assigns a gray value to a color by applying a weight to the gray value of the plurality of representative colors according to a degree of similarity between the determined representative colors and an arbitrary color of an RGB image to be converted.

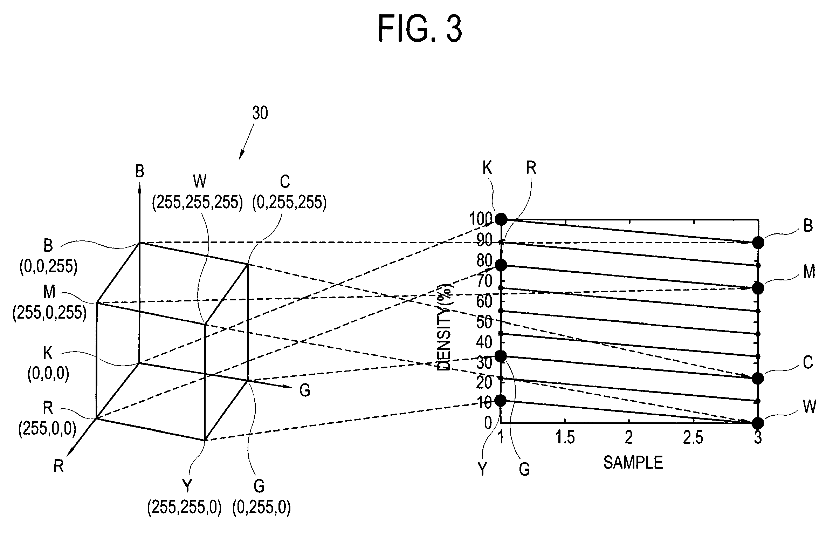

The representative colors are determined to correspond to a color space of a color image. For example, in an RGB color space, red (R), green (G), blue (B), cyan (C), magenta (M), yellow (Y), black (K), and white (W) can be determined as representative colors which are able to show relations with other colors. FIG. 3 illustrates an RGB color space 30 to display eight representative colors, such as red, green, blue, cyan, magenta, yellow, black, and white. In the RGB color space 30, coordinates of each colors (R, G, B, C, M, Y, K and W) are (255, 0, 0), (0, 255, 0), (0, 0, 255), (0, 255, 255), (255, 0, 255), (255, 255, 0), (0, 0, 0) and (255, 255, 255), respectively.

Gray values are assigned to the respective representative colors to clearly distinguish objects in a converted gray image. That is, the eight gray values may be assigned to the respective representative colors so that range variations between the gray values are less than a predetermined value. For example in an embodiment not in the scope of the claims, the range variations between the eight gray values assigned to the eight representative colors may become zero, i.e., the respective range values between the gray values may be regular.

The gray values may be assigned to the representative colors considering a National Television System Committee (NTSC) color order to reflect brightness which a user perceives. That is, the gray values can be assigned to the representative colors in order of black, blue, red, magenta, green, cyan, yellow, and white. FIG. 3 illustrates an order of assigning the gray values to the eight representative colors (K, B, R, M, G, C, Y, and W).

Alternatively, if it is necessary to distinguish a specific color, the color may be assigned a gray value by a different order of assigning the gray values to improve its distinction.

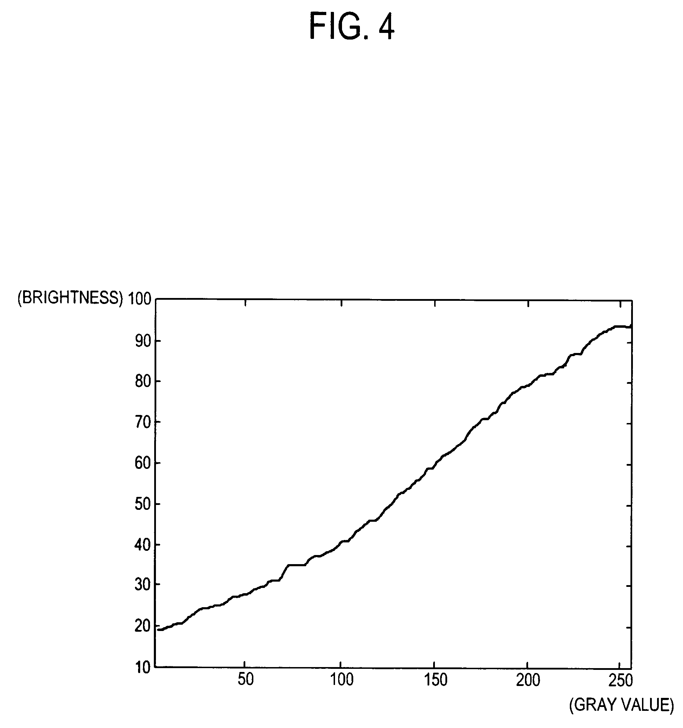

A characteristic of the printing apparatus 200 may be reflected when the gray values are assigned to the representative colors. FIG. 4 illustrates brightness output by the printing apparatus 200 on a gray value which is linearly and increasingly input. Here, a gray test chart of 256 levels may be used as the input. Referring to FIG. 4, the printing apparatus 200 may have a characteristic of non-linear brightness output on the gray value which linearly increases. This characteristic of the brightness output causes distinction of an output image to be reduced.

In the present exemplary embodiment, the gray values can be assigned to the eight representative colors to compensate for a non-linear characteristic of the brightness output of the printing apparatus 200. The characteristic of the brightness output may be compensated using an equation 1 and an equation 2 below.

[Equation 1]

$$l = \frac{L_{max} - L_{min}}{N - 1}$$

[Equation 2]

$$L_N = \{L_0, L_1, L_2 ... L_{N-1}\}$$
$$= \{0, l, 2l, ...,(N-1)l\}$$

Here, 1 represents a brightness range value, Lmax represents a maximum output brightness value on the gray test chart of the 256 levels, Lmin represents a minimum output brightness value, and N represents the number of the representative colors. $L_N$ represents target brightness to the respective representative colors.

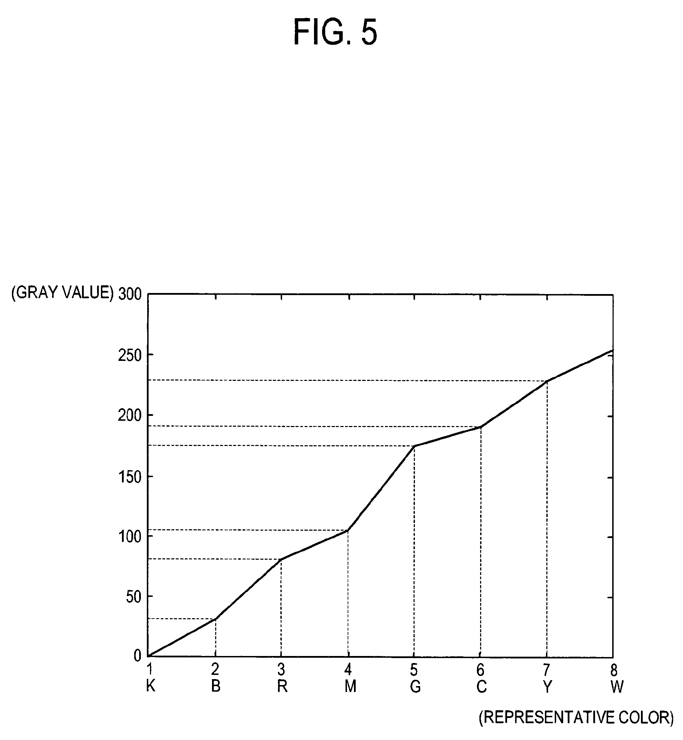

According to equation 1 and equation 2, the plurality of target brightness corresponding to the plurality of representative colors are regular in each range. For example, the eight gray values assigned to the eight representative colors (K, B, R, M, G, C, Y, and W) correspond to the target brightness $L_N$ illustrated in the graph of FIG. 4 and are given as 0, 32, 82, 106, 176, ca. 191, 230, and 255. FIG. 5 illustrates the gray values about the eight representative values with regular brightness range values.

Next, an arbitrary color of an RGB image to be converted is assigned a gray value as described below. The image processor 110 assigns a gray value to an arbitrary color according to a degree of similarity between the representative colors and the arbitrary color of the RGB image to be converted by applying weight to the gray values of the representative colors.

Referring to FIG. 3, the weight is determined by a relative position of a point corresponding to an arbitrary color to points of the eight representative colors (K, B, R, M, G, C, Y, and W) in the RGB color space 30. That is, points, among the points corresponding to the eight representative colors, which are closer to the point corresponding to the arbitrary color, are given greater weight.

If an RGB image is 24 bits, a gray value is assigned to an arbitrary color by an equation 3 and an equation 4 below.

[Equation 3]

gray 1 = c[0] + (c[1]xr0)/255 + (c[2]xg0)/255 +

(c[3]xb0)/255 + (c[4]xr0xb0)/65025 + (c[5]xg0xb0)/65025

[Equation 4]

gray 2 = c[0] + (c[6]xr0)/255 + (c[7]xg0)/255 +

(c[8]xb0)/255 + (c[9]xr0xb0)/65025 + (c[10]xg0xb0)/65025

In equations 3 and 4, gray 1 and gray 2 represent a gray value assigned to an arbitrary color, and r0, g0, and b0 represent an RGB element value of the color. Equation 3 is employed when r0 of the color is higher than g0 thereof, and equation 4 is employed otherwise. c[0] to c[10] represent a parameter, and values thereof are as follows:

c[0]=k;

c[1]=r-k;

c[2]=y-r;

$$c[3]=b-k;$$

$$c[4]=m-b-r+k$$

$$c[5]=w-m-y+r;$$

$$c[6]=y-g;$$

$$c[7]=g-k;$$

$$c[8]=b-k;$$

$$c[9]=w-c-y+g;$$

and

$$c[10]=c-b-g+k.$$

Here, k, b, r, m, g, c, y, and w are the gray values assigned to the eight representative colors (K, B, R, M, G, C, Y, and W).

A lookup table may be used for the gray conversion by the image processor 110. The lookup table may include the eight representative colors (K, B, R, M, G, C, Y, and W) and the gray values corresponding thereto. The gray values may be assigned to the eight representative colors considering the characteristics of the printing apparatus 200. The image processing apparatus 100 may further include a storage part 120 which stores the lookup table.

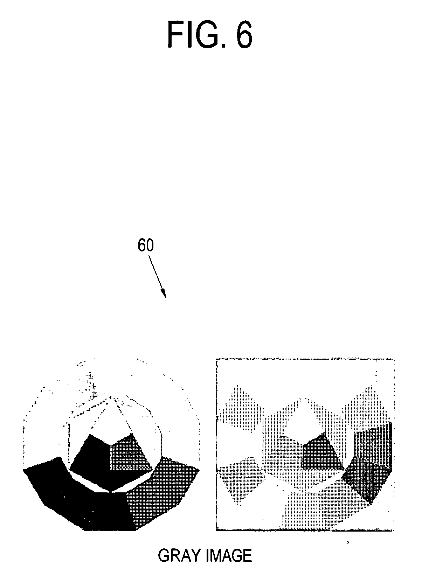

FIG. 6 illustrates a printed second image 60 into which the RGB image 1 illustrated in FIG. 1 is gray-converted according to an exemplary embodiment of the present general inventive concept. Unlike the first gray image 2 illustrated in FIG. 1, the second gray image 60 of FIG. 6 has figures which are clearly distinguished.

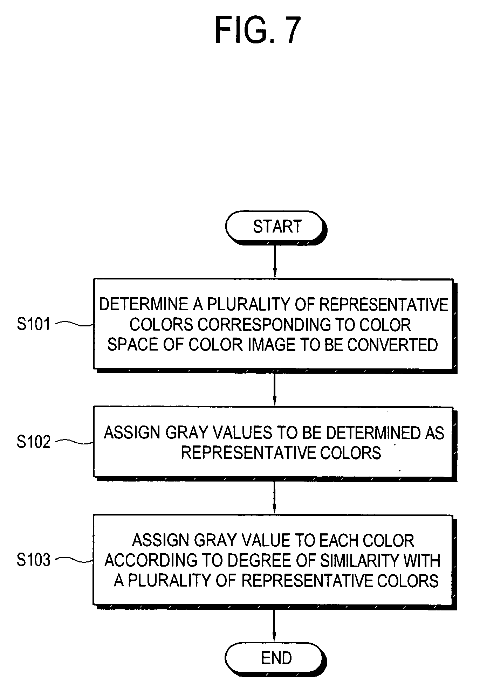

FIG. 7 is a flow chart to illustrate an operation of the image processing apparatus 100 according to an exemplary embodiment of the present general inventive concept. First, a plurality of representative colors are determined to correspond to a color space of a color image to be converted in operation S101. If the color image to be converted is in an RGB color space, black, blue, red, magenta, green, cyan, yellow, and white are determined as eight representative colors.

Then, gray values are assigned to the determined representative colors so that range variations between the gray values are less than a predetermined value n operation S102. In operation S102, for example, the range values between the gray values may be regular. Also, compensation may be performed to reflect characteristics of the printing apparatus 200. In this case, the gray values are determined to consider a brightness characteristic of the printing apparatus 200 so that all brightness ranges corresponding to the representative colors are regular.

Next, a gray value is assigned to an arbitrary color of a color image n operation S103. At operation S103, the gray values of the representative colors are weighted according to a degree of similarity between the representative colors and the arbitrary color. In detail, the representative colors which are similar to the arbitrary color have greater weight.

Various embodiments of the present general inventive concept can be embodied as computer readable codes on a computer-readable medium. The computer-readable medium includes a computer-readable recording medium and a computer-readable transmission medium. The computer readable recording medium may include any data storage device suitable to store data that can be thereafter read by a computer system. Examples of the computer readable recording medium include, but are not limited to, a read-only memory (ROM), a random-access memory (RAM), CD-ROMs, magnetic tapes, floppy disks, optical data storage devices, and carrier waves (such as data transmission through the Internet). The computer readable transmission medium can be distributed over network coupled computer systems, through wireless or wired communications over the internet, so that the computer readable code is stored and executed in a distributed fashion. Various embodiments of the present general inventive concept may also be embodied in hardware or in a combination of hardware and software.

As described above, the present general inventive concept provides an image processing apparatus and an image processing method to clearly distinguish objects when a color image to be printed is converted into a gray image.

That is, gray values are assigned to colors in a color space so that range values between the gray values are maximally regular, thereby distinguishing objects in a gray image optimally.

Although a few exemplary embodiments of the present general inventive concept have been shown and described, it will be appreciated by those skilled in the art that changes may be made in these exemplary embodiments without departing from the principles of the general inventive concept, the scope of which is defined in the appended claims.

## Claims

1. An image processing method which changes a color image into a gray image, the image processing method comprising:

    determining a plurality of representative colors of a colour space;
    assigning representative gray values to the representative colors, wherein the representative gray values are not equally spaced, to compensate for a non-linear characteristic of brightness output of a printing apparrus; and ; and
    assigning a gray value to an arbitrary color of the color image based on a weighting of components of the arbitrary colour using coefficients formed from a linear combination of said representative gray values.

2. The image processing method of claim 1, wherein:

    the color image is an RGB image, and
    the determining of the representative colors determines black, blue, red, magenta, green, cyan, yellow, and white as the representative colors.

3. An image processing apparatus (100) for converting a color image into a gray image, the image processing apparatus comprising:

    an image processor (110) adapted to determine a plurality of representative colors, of a colour space, to assign representative gray values to the representative colors, wherein the representative gray values are not equally spaced, to compensate for a non-linear characteristic of a brightness out put of a printing apparatus to print the converted gray image , and to assign a gray value to an arbitrary color of the color image based on a weighting of components of the arbitrary colour using coefficients formed from a non-linear combination of said representative gray values.

4. The image processing apparatus (100) of claim 3, wherein:

    the color image is an RGB image, and
    the image processor (110) determines black, blue, red, magenta, green, cyan, yellow, and white as the representative colors.

5. The method of claim 1 or claim 2, wherein the representative gray level values for each of the representative colors are assigned values according to NTSC guidelines.

6. The method of claim 1 or claim 2, wherein the representative gray level values for each of the representative colors are assigned in a specific order to improve distinction of a particular representative color.

7. The method of claims 1, 2, 5 or 6, further comprising:

    storing a predetermined lookup table of representative grey level values corresponding to predetermined colors, wherein the assigning of the representative gray level values for each of the representative colors determined is performed according to the lookup table.

**Patentansprüche**

1. Bildverarbeitungsverfahren, das ein Farbbild in ein Graubild verändert, wobei das Bildverarbeitungsverfahren Folgendes umfasst:

   Bestimmen von mehreren repräsentativen Farben eines Farbraums;
   Zuweisen von repräsentativen Grauwerten zu den repräsentativen Farben, wobei die repräsentativen Grauwerte nicht gleichmäßig beabstandet sind, um eine nichtlineare Charakteristik einer Helligkeitsausgabe einer Druckvorrichtung zu kompensieren; und
   Zuweisen eines Grauwerts zu einer willkürlichen Farbe des Farbbilds auf der Basis einer Gewichtung von Komponenten der willkürlichen Farbe unter Verwendung von Koeffizienten, die aus einer linearen Kombination der repräsentativen Grauwerte ausgebildet sind.

2. Bildverarbeitungsverfahren nach Anspruch 1, wobei:

   das Farbbild ein RGB-Bild ist und
   das Bestimmen der repräsentativen Farben Schwarz, Blau, Rot, Magenta, Grün, Cyan, Gelb und Weiß als die repräsentativen Farben bestimmt.

3. Bildverarbeitungsvorrichtung (100) zum Umwandeln eines Farbbilds in ein Graubild, wobei die Bildverarbeitungsvorrichtung Folgendes umfasst:

   einen Bildprozessor (110), ausgelegt zum Bestimmen von mehreren repräsentativen Farben eines Farbraums, zum Zuweisen von repräsentativen Grauwerten zu den repräsentativen Farben, wobei di e repräsentativen Grauwerte nicht gleichmäßig beabstandet sind, um eine nichtlineare Charakteristik einer Helligkeitsausgabe einer Druckvorrichtung zu kompensieren, um das umgewandelte Graubild zu drucken, und zum Zuweisen eines Grauwerts zu einer willkürlichen Farbe des Farbbilds au f de r Basis einer Gewichtung von Komponenten der willkürlichen Farbe unter Verwendung von Koeffizienten, die aus einer nichtlinearen Kombination der repräsentativen Grauwerte ausgebildet sind.

4. Bildverarbeitungsvorrichtung (100) nach Anspruch 3, wobei:

   das Farbbild ein RGB-Bild ist und
   der Bildprozessor (110) Schwarz, Blau, Rot, Magenta, Grün, Cyan, Gelb un d Weiß als die repräsentativen Farben bestimmt.

5. Verfahren nach Anspruch 1 oder Anspruch 2, wobei den repräsentativen Graustufenwerten für jede der repräsentativen Farben Werte gemäß NTSC-Richtlinien zugeordnet sind.

6. Verfahren nach Anspruch 1 oder Anspruch 2, wobei die repräsentativen Graustufenwerte für jede der repräsentativen Farben in einer spezifischen Reihenfolge zugeordnet sind, um die Unterscheidung einer bestimmten repräsentativen Farbe zu verbessern.

7. Verfahren nach den Ansprüchen 1, 2, 5 oder 6, weiterhin umfassend:

   Speichern einer vorbestimmten Nachschlagetabelle von repräsentativen Graustufenwerten, entsprechend vorbestimmten Farben,
   wobei da s Zuweisen der repräsentativen Graustufenwerte für jede der bestimmten repräsentativen Farben gemäß der Nachschlagetabelle durchgeführt wird.

**Revendications**

1. Procédé de traitement d'image pour convertir une image couleur en une image grise, lequel procédé de traitement d'image comprenant les étapes consistant à :

   - déterminer un e pluralité d e couleurs représentatives d'un espace de couleurs ;
   - attribuer des valeurs de gris représentatives aux couleurs représentatives, lesquelles valeurs de gris représentatives ne sont pas équidistantes, afin de compenser une caractéristique non linéaire d'une sortie de luminosité d'un appareil d'impression ; et
- attribuer une Valeur de gris à un e couleur arbitraire de l'image couleur en fonction d'une pondération de composantes de la couleur arbitraire en utilisant des coefficients obtenus à partir d'une combinaison linéaire desdites valeurs de gris représentatives.

2. Procédé d e traitement d'image selon la revendication 1, dans lequel :

- l'image couleur est une image RVB ; et
- l'étape consistant à déterminer les couleurs représentatives consiste à déterminer le noir, le bleu, le rouge, le magenta, le vert, le cyan, le jaune et le blanc au titre des couleurs représentatives.

3. Appareil de traitement d'image (100) pour convertir une image couleur en une image grise, lequel appareil de traitement d'image comprend :

- un processeur d'image (110) conçu pour déterminer une pluralité de couleurs représentatives d'un espace de couleurs, pour attribuer des valeurs de gris représentatives au x couleurs représentatives, lesquelles valeurs de gris représentatives ne sont pas équidistantes, afin de compenser une caractéristique non linéaire d'une sortie de luminosité d'un appareil d'impression pour imprimer l'image grise convertie, et pour attribuer une valeur de gris à une couleur arbitraire de l'image couleur en fonction d'une pondération de composantes de la couleur arbitraire en utilisant des coefficients obtenus à partir d'une combinaison non linéaire desdites valeurs de gris représentatives.

4. Appareil de traitement d'image (100) selon la revendication 3, dans lequel :

- l'image couleur est une image RVB ; et
- le processeur d'image (110) détermine le noir, le bleu, le rouge, le magenta, le vert, le cyan, le jaune et le blanc en qualité de couleurs représentatives.

5. Procédé selon la revendication 1 ou la revendication 2, dans lequel on attribue aux valeurs de niveau de gr i s représentatives pour chacun e des couleurs représentatives, des valeurs qui sont fonction des directives NTSC.

6. Procédé selon la revendication 1 ou la revendication 2, dans lequel les valeurs de niveau de gris représentatives pour chacune de s couleurs représentatives font l'objet d'une attribution selon un ordre spécifique afin d'améliorer la distinction d'une couleur représentative particulière.

7. Procédé selon les revendications 1, 2, 5 ou 6, comprenant en outre l'étape consistant à :

- stocker une table à consulter prédéterminée de valeurs de niveau de gris représentatives correspondant à des couleurs prédéterminées ;

dans lequel l'étape consistant à attribuer les valeurs de niveau de gris représentatives pour chacune des couleurs représentatives déterminées se fait en fonction de la table à consulter.

# FIG. 1

COLOR IMAGE

GRAY IMAGE

# FIG. 2

100

200

IMAGE PROCESSING APPARATUS

PRINTING APPARATUS

110 — IMAGE PROCESSOR

120 — STORAGE PART

# FIG. 3

# FIG. 4

# FIG. 5

# FIG. 6

60

GRAY IMAGE

# FIG. 7

START

S101 — DETERMINE A PLURALITY OF REPRESENTATIVE
COLORS CORRESPONDING TO COLOR
SPACE OF COLOR IMAGE TO BE CONVERTED

S102 — ASSIGN GRAY VALUES TO BE DETERMINED AS
REPRESENTATIVE COLORS

S103 — ASSIGN GRAY VALUE TO EACH COLOR
ACCORDING TO DEGREE OF SIMILARITY WITH
A PLURALITY OF REPRESENTATIVE COLORS

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5062001 A

• US 6574004 B

**Non-patent literature cited in the description**

• Colour-to-grayscale conversion to maintain discriminability. *COLOR IMAGING IX: PROCCESSING, HARDCOPY, AND APPLICATIONS, PROCEEDINGS OF SPIE-IS&T ELECTRONIC IMAGING, SPIE,* 20 January 2004, vol. 5293, 196-202